# FASCICULE DE BREVET EUROPEEN

(11) **EP 3 624 255 B1**
(45) Date de publication et mention de la délivrance du brevet: **09.08.2023**
(21) Numéro de dépôt: 19196917.9
(22) Date de dépôt: 12.09.2019
(51) Int. Cl.: H01P 1/06

(54) **ENSEMBLE DE GUIDAGE D'ONDES RADIOÉLECTRIQUES ET ANTENNE COMPRENANT UN TEL ENSEMBLE**
GRUPPE VON HOHLEITERN UND ANTENNE MIT SOLCHER GRUPPE
GUIDING SET OF RADIO-ELECTRIC WAVES AND ANTENNA COMPRISING SUCH A SET

(30) Priorité: 13.09.2018 FR 1800955
(43) Date de publication de la demande: 18.03.2020
(73) Titulaire: Thales, 92400 Courbevoie (FR)
(72) Inventeur: FERRANDO, Nicolas, 31100 TOULOUSE (FR); SAINT-MARTIN, Olivier, 31100 TOULOUSE (FR)
(74) Mandataire: Lavoix

(56) Documents cités:
- US-A- 2 588 103
- US-A- 2 850 706
- US-A- 4 283 727
- US-A- 4 675 633
- US-A1- 2005 128 028
- US-A1- 2011 187 614

## Description

La présente invention concerne un ensemble de guidage d'ondes radioélectriques.

La présente invention concerne également une antenne comprenant un tel ensemble.

L'invention propose de résoudre les problèmes de différence de coefficients de dilatation thermique dans un système conduisant des ondes radioélectriques. L'invention trouve ainsi son intérêt particulièrement dans le domaine spatial où des variations de température considérables engendrent de fortes dilations thermiques. Cela est notamment le cas des systèmes comprenant des guides d'ondes, tels que par exemple des antennes embarquées à bord de satellites.

Généralement, lorsqu'un système est soumis à de fortes variations de température, pour ne pas générer de contraintes mécaniques trop fortes sur les structures, il est connu d'utiliser des matériaux stables en température comme par exemple le carbone ou la céramique.

Ces matériaux restent toutefois inadaptés pour les guides d'ondes radioélectriques qui nécessitent des matériaux conducteurs. Le plus souvent, ces guides sont réalisés en aluminium.

Ainsi, dans des systèmes intégrant à la fois une structure dont les dimensions sont sensiblement invariables et des guides d'ondes dont les dimensions sont soumises à la variation de température, ces derniers doivent être conçus afin de prendre en compte leur dilatation qui peut atteindre parfois plusieurs centimètres dans le sens de guidage des ondes.

Pour ce faire, il est connu dans l'état de technique d'utiliser des guides souples et/ou de nombreuses boucles de relaxation permettant « d'absorber » les dilatations.

Ces solutions rendent toutefois le routage des ondes radioélectriques au sein du système particulièrement complexe en générant notamment des longueurs supplémentaires des guides d'ondes. Ainsi, dans certains cas, cela peut limiter les performances radioélectriques et/ou thermiques du système. En outre, cela peut limiter les performances mécaniques du système définies par le comportement mécanique de l'antenne et sa masse.

En effet, un tel routage peut dégrader des performances radioélectriques du système par des pertes d'insertion ou des pertes ohmiques. En outre, il peut dégrader des performances mécaniques du système en faisant ajouter de la masse supplémentaire. Il peut également dégrader des performances thermiques du système en ajoutant de l'énergie supplémentaire à dissiper suite notamment à des pertes ohmiques.

Finalement, un tel routage rend difficile la conception du système ainsi que sa fabrication.

On connait également des systèmes de guidage d'ondes radioélectriques tels que décrits dans les documents US 2 850 706 A, US 2011/187614 A1, US 2 588 103 A, US 4 675 633 A et US 2005/128028 A1.

La présente invention a pour but de simplifier considérablement le routage des ondes radioélectriques dans un système subissant de fortes variations thermiques et donc de remédier aux problèmes précités.

À cet effet, l'invention a pour objet un ensemble de guidage conforme à la revendication 1.

Suivant d'autres aspects avantageux de l'invention, l'ensemble de guidage comprend une ou plusieurs des caractéristiques des revendications dépendantes.

La présente invention a également pour objet une antenne comprenant un tel ensemble de guidage d'ondes radioélectriques.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'une antenne selon l'invention ;
- la figure 2 est une vue partielle en perspective d'un ensemble de guidage selon un premier mode de réalisation de l'invention ;
- la figure 3 est une vue de côté de l'ensemble de guidage de la figure 2 ; et
- la figure 4 est une vue partielle de dessus d'un ensemble de guidage selon un deuxième mode de réalisation de l'invention.

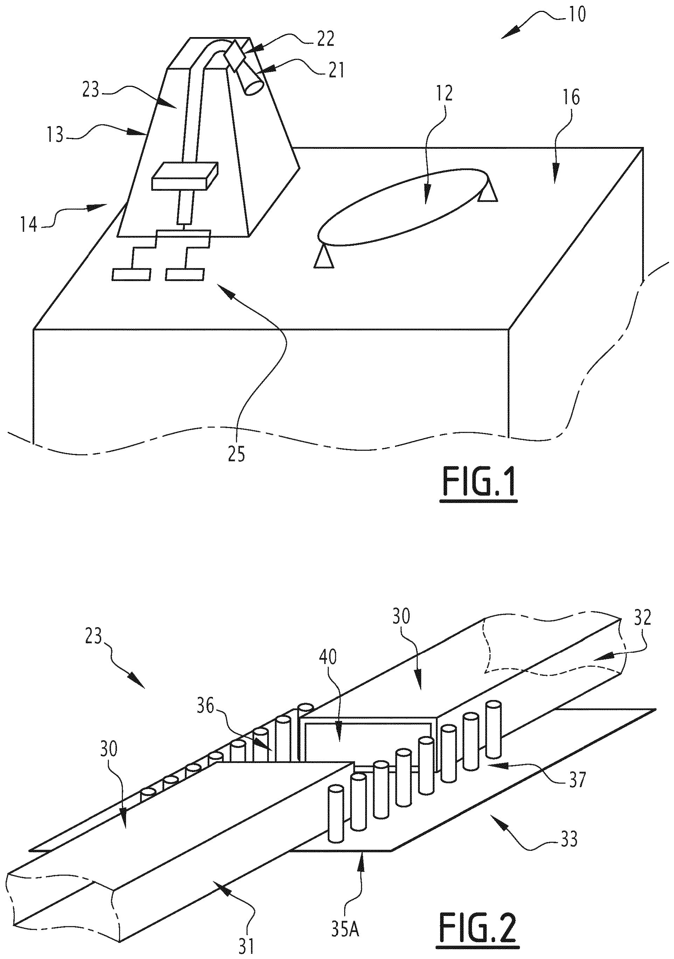

L'antenne 10 de la figure 1 est par exemple une antenne de type « face Terre » embarquée à bord d'un satellite.

Ainsi, de façon connue en soi, une telle antenne 10 comprend un réflecteur 12, un support 13 et un ensemble 14 d'émission/réception des ondes radioélectriques.

Le réflecteur 12 est par exemple disposé sur une surface 16 du satellite orientée vers la surface terrestre.

Le support 13 assure la fixation de l'ensemble d'émission/réception 14 au satellite. Ce support 13 est fait par exemple d'un matériau dont les dimensions sont sensiblement invariables à des variations de la température.

L'ensemble d'émission/réception 14 est disposé sur le support 13 et comprend notamment un cornet 21 d'émission/réception des ondes radioélectriques disposé face au réflecteur 12, un excitateur radioélectrique 22 raccordé au cornet 21 et un ensemble de guidage 23 raccordant l'excitateur radioélectrique 22 à une charge utile 25 du satellite.

Le réflecteur 12, le cornet 21 et l'excitateur radioélectrique 22 sont connus en soi et ne seront pas expliqués en détail par la suite.

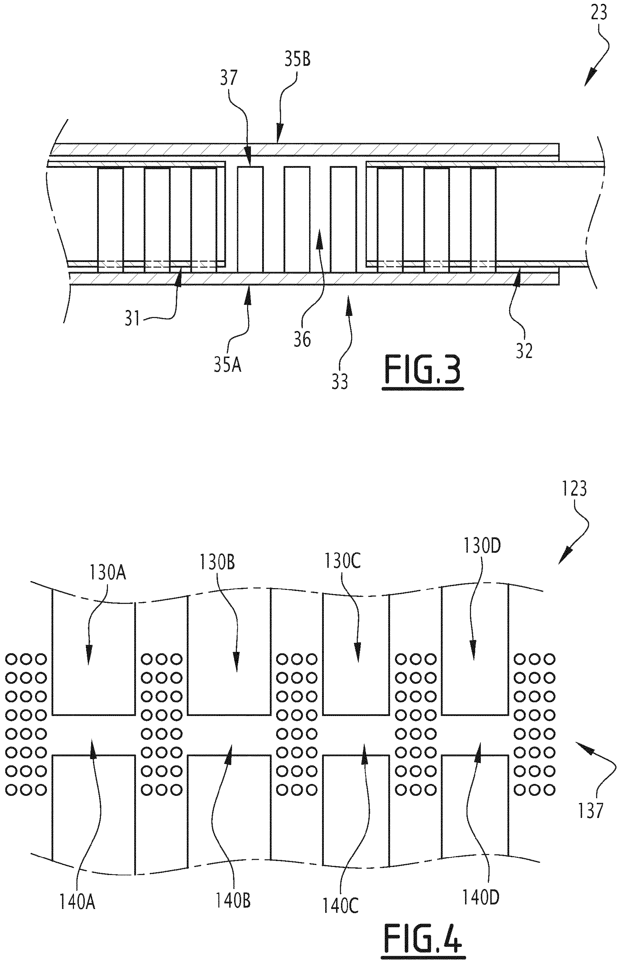

L'ensemble de guidage 23 selon un premier mode de réalisation de l'invention est illustré en détail sur les figures 2 et 3.

Selon ce premier mode de réalisation, l'ensemble de guidage 23 forme une seule voie de transmission des ondes radioélectriques. Cette voie de transmission permet de transmettre des ondes radioélectriques de la charge utile 25 du satellite vers l'excitateur radioélectrique 22 pour être émises via le cornet 21 ou inversement, des ondes radioélectriques reçues par le cornet 21 et l'excitateur radioélectrique 22 vers la charge utile 25 du satellite.

En références à ces figures 2 et 3, l'ensemble de guidage 23 comprend un couple de guides d'ondes 30 composé d'un premier guide d'ondes 31 et d'un deuxième guide d'ondes 32, et une pièce da raccordement 33 de ces guides d'ondes 31, 32.

Le premier guide d'ondes 31 et le deuxième guide d'ondes 32 forment des tronçons successifs d'une même voie de transmission des ondes radioélectriques. Ils sont par exemple réalisés en métal tel que l'aluminium et présentent par exemple une même forme en coupe transversale. Cette forme correspond par exemple à un rectangle.

Dans l'exemple illustré sur la figure 1, le premier guide d'ondes 31 est raccordé à la charge utile 25 du satellite et le deuxième guide d'ondes est raccordé à l'excitateur radioélectrique 22.

Toutefois, dans le cas général, le premier guide d'ondes 31 et/ou le deuxième guide d'ondes 32 peuvent être raccordés à au moins un autre guide d'ondes éventuellement via une pièce de raccordement analogue à la pièce de raccordement 33.

En outre, selon un exemple de réalisation, le premier guide d'ondes 31 fait partie de la charge utile 25 du satellite ou de toute pièce finale sur laquelle débouche la voie de transmission correspondante. Dans un tel cas, la pièce de raccordement correspondante raccorde le deuxième guide d'ondes à cette charge utile ou à cette pièce finale.

De manière analogue, selon un exemple de réalisation, le deuxième guide d'ondes 32 fait partie de l'excitateur radioélectrique 22 ou de toute autre pièce initiale à partir de laquelle s'étend la voie de transmission correspondante.

La pièce de raccordement 33 est faite par exemple du même matériau que les guides d'ondes 31, 32 et comprend deux plaques 35A, 35B disposées l'une en regard de l'autre en définissant un espace interne 36 entre elles. Sur la figure 2, pour les raisons de simplicité, seule la plaque 35A est visible.

La pièce de raccordement 33 comprend en outre des moyens de limitation 37 formant dans l'espace interne 36 un canal de transmission 40 d'ondes radioélectriques.

Le canal de transmission 40 raccorde les deux guides d'ondes 31, 32 entre eux. Il débouche donc d'une part sur le premier guide d'ondes 31 et d'autre part sur le deuxième guide d'ondes 32.

Dans l'exemple de réalisation décrit, au moins l'un des guides d'ondes 31, 32, par exemple le deuxième guide d'ondes 32, est inséré avec un jeu dans ce canal 40 de sorte qu'il puisse glisser librement le long du canal. Dans ce cas, l'autre guide d'ondes, c'est-à-dire le premier guide d'ondes 31 est solidaire avec la pièce de raccordement 33.

La longueur du canal 40 sur laquelle le deuxième guide d'ondes 32 peut glisser librement est choisie par exemple en fonction de la dilatation maximale de ce guide dans la direction de propagation des ondes. En particulier, cette longueur correspond par exemple à la différence de la longueur maximale de ce guide et de sa longueur minimale.

Selon un autre exemple de réalisation, les deux guides d'ondes 31, 32 sont aptes à glisser le long du canal 40 avec un jeu.

Le canal de transmission 40 présente par exemple une forme en coupe transversale analogue à celle des guides d'ondes 31, 32 mais de dimensions plus importantes afin que l'un ou/et l'autre guide d'ondes puisse glisser librement le long de ce canal 40.

Le canal de transmission 40 est formé selon la technologie connue dans terminologie anglo-saxonne sous le nom de « *groove gap waveguide* ».

Ainsi, dans ce cas, les moyens de délimitation 37 se présentent sous la forme de plots disposés de part et d'autre du canal 40.

En particulier, comme cela est visible sur la figure 2, ces plots sont disposés transversalement par rapport aux plaques 35A, 35B selon au moins deux rangées, chaque rangée correspondant à une barrière radioélectrique formant alors une « paroi » du canal 40.

Au sein de chaque rangée, les plots sont par exemple espacés de manière homogène.

De préférence, les plots sont disposés en au moins deux rangées de chaque côté du canal 40. Ces rangées s'étendent par exemple selon des directions parallèles et permettent de limiter la fuite des ondes radioélectriques transitant par le canal 40. Il est également possible de disposer les plots en au moins trois rangées de chaque côté du canal 40 pour avoir une marge de sécurité nécessaire.

Les plots sont solidaires avec l'une des plaques 35A, 35B, par exemple avec la plaque 35A, et forment par exemple une seule pièce venue de matière avec cette plaque.

Par ailleurs, les plots sont espacés de l'autre plaque selon une distance prédéterminée.

La distance d'espacement des plots au sein de chaque rangée, l'espacement des rangées entre elles ainsi que l'espacement des plots de la plaque 35B sont choisis en fonction de fréquences ou/et de longueurs des ondes radioélectriques pour lesquelles la voie de transmission correspondante de l'ensemble de guidage 23 est conçue. Ce choix est effectué selon des techniques connues en soi.

En fonctionnement, l'antenne 10 subit des variations de température considérables. Ainsi, avec la montée de la température, les différentes composantes de l'ensemble de guidage 23 se dilatent. En particulier, le premier et le deuxième guides d'ondes 31, 32 se dilatent en augmentant leurs longueurs respectives.

Dans ce cas, le deuxième guide d'ondes 32 glisse le long du canal de transmission 40 vers le premier guide d'ondes 31 ce qui permet « d'absorber » les parties dilatées de ces guides.

Lorsque la température descend, les différentes composantes de l'ensemble de guidage 23 se rétrécissent et le deuxième guide d'ondes 32 glisse donc le long du canal 40 en s'éloignant du premier guide d'ondes 31.

La figure 4 illustre un ensemble de guidage 123 selon un deuxième mode de réalisation de l'invention.

Cet ensemble de guidage 123 peut être monté dans l'antenne 10 de la figure 1 à la place de l'ensemble de guidage 23 décrit précédemment.

L'ensemble de guidage 123 selon le deuxième mode de réalisation diffère de celui selon le premier mode de réalisation uniquement en ce qu'il comprend plusieurs couples 130A à 130D de guides d'ondes analogues au couple 30 du premier et du deuxième guides d'ondes 31, 32 décrit précédemment et en ce qu'il comprend des moyens de délimitation 137 délimitant un canal de transmission 140A à 140D pour chaque couple 130A à 130D.

Ainsi, dans ce cas, l'ensemble de guidage 123 forme plusieurs voies de transmission d'ondes radioélectriques qui sont éventuellement conçues pour guider des ondes radioélectriques de natures différentes.

Selon ce mode de réalisation, les moyens de délimitation 137 se présentent toujours sous la forme de plots disposés de part et d'autre de chaque canal de transmission 140A à 140D.

Ainsi, par exemple, comme cela est représenté sur la figure 4, ces canaux de transmission 140A à 140D sont séparés par des plots disposés en trois rangées.

Bien entendu, toutes les variantes décrites en relation avec le premier mode de réalisation restent également applicables à l'ensemble de guidage 123 selon le deuxième mode de réalisation.

Par ailleurs, il est clair que l'ensemble de guidage décrit selon l'un des modes de réalisation de l'invention reste utilisable non-seulement dans une antenne mais dans tout autre système nécessitant d'un routage des ondes radioélectriques et subissant de fortes variations de la température.

On conçoit alors que la présente invention présente un certain nombre d'avantages.

Tout d'abord, l'invention permet d'effectuer le routage des ondes radioélectriques de manière très simple, tout en prenant en compte les dilations de différentes composantes.

Ceci permet d'éviter l'utilisation de boucles de relaxation spécifiques et/ou de guides flexibles et rend alors la structure plus compacte et plus facile à concevoir et à mettre en place. De plus, cela permet de garder des performances radioélectriques, thermiques et mécaniques intactes.

## Revendications

1. Ensemble de guidage (23 ; 123) d'ondes radioélectriques comprenant un couple de guide d'ondes (30 ; 130A,...,130D) composé d'un premier guide d'ondes (31) et d'un deuxième guide d'ondes (32) formant des tronçons successifs d'une même voie de transmission des ondes radioélectriques ;
l'ensemble (23 ; 123) comprenant en outre une pièce de raccordement (33) comprenant :
- deux plaques (35A, 35B) disposées l'une en regard de l'autre en définissant un espace interne (36) entre elles ;
- des moyens de délimitation (37 ; 137) délimitant dans l'espace interne (36) un canal de transmission (40 ; 140A,...,140D) d'ondes radioélectriques, le canal de transmission (40 ; 140A,...,140D) débouchant d'une part sur le premier guide d'ondes (31) et d'autre part sur le deuxième guide d'ondes (32) ;
les moyens de délimitation (37 ; 137) étant formés d'une pluralité de plots s'étendant transversalement entre les deux plaques (35A, 35B) ;
le deuxième guide d'ondes (32) étant apte à glisser librement le long du canal de transmission (40 ; 140A,...,140D) avec un jeu ;
les plots étant disposés en au moins deux rangées, le canal de transmission (40 ; 140A,...,140D) étant formé entre ces rangées.

2. Ensemble (23 ; 123) selon la revendication 1, **caractérisé en ce que** le premier guide d'ondes (31) est solidaire avec la pièce de raccordement (33).

3. Ensemble (23 ; 123) selon l'une quelconque des revendications précédentes, **caractérisé en ce que** chacun du premier guide d'ondes (31) et du deuxième guide d'ondes (32) est inséré entre lesdites rangées de plots.

4. Ensemble (23 ; 123) selon l'une quelconque des revendications précédentes, **caractérisé en ce que** de chaque côté du canal de transmission (40 ; 140A,...,140D), les plots sont disposés en au moins deux rangées s'étendant suivant des directions parallèles.

5. Ensemble (23 ; 123) selon l'une quelconque des revendications précédentes, **caractérisé en ce que** les moyens de délimitation (37 ; 137) sont solidaires avec au moins l'une des plaques (35A, 35B) et sont espacés de l'autre.

6. Ensemble (123) selon l'une quelconque des revendications précédentes, **caractérisé en ce qu'**il comporte en outre un autre couple de guides d'ondes (130A,...,130D) analogue audit couple de guides d'ondes et **en ce que** les moyens de délimitation (137) délimitent dans l'espace interne (36) un canal de transmission (40 ; 140A,...,140D) pour chaque couple de guides d'ondes (130A,...,130D).

7. Antenne (10) comprenant un ensemble de guidage (23 ; 123) d'ondes radioélectriques selon l'une quelconque des revendications précédentes.

## Patentansprüche

1. Leitanordnung (23; 123) von Funkwellen, umfassend ein Wellenleiterpaar (30; 130A, ..., 130D), das aus einem ersten Wellenleiter (31) und einem zweiten Wellenleiter (32) besteht, die aufeinanderfolgenden Abschnitte eines gleichen Übertragungswegs für Funkwellen bilden;
die Anordnung (23; 123) ferner umfassend ein Anschlussstück (33), umfassend:
- zwei Platten (35A, 35B), die einander gegenüberliegend angeordnet sind, wobei dazwischen ein Innenraum (36) definiert ist;
- Begrenzungseinrichtungen (37; 137), die in dem Innenraum (36) einen Übertragungskanal (40; 140A,..., 140D) für Funkwellen begrenzen, wobei der Übertragungskanal (40; 140A,..., 140D) einerseits in den ersten Wellenleiter (31) und andererseits in den zweiten Wellenleiter (32) mündet;
die Begrenzungseinrichtungen (37; 137) aus einer Vielzahl von Noppen gebildet sind, die sich quer zwischen den zwei Platten (35A, 35B) erstrecken;
wobei der zweite Wellenleiter (32) geeignet ist, um mit einem Spiel frei entlang des Übertragungskanals (40; 140A,..., 140D) zu gleiten;
wobei die Noppen in mindestens zwei Reihen angeordnet sind, wobei der Übertragungskanal (40; 140A,..., 140D) zwischen diesen Reihen gebildet ist.

2. Anordnung (23; 123) nach Anspruch 1, **dadurch gekennzeichnet, dass** der erste Wellenleiter (31) einstückig mit dem Anschlussstück (33) ist.

3. Anordnung (23; 123) nach einem der vorherigen Ansprüche, **dadurch gekennzeichnet, dass** jeder von dem ersten Wellenleiter (31) und dem zweiten Wellenleiter (32) zwischen den Reihen von Noppen eingefügt ist.

4. Anordnung (23; 123) nach einem der vorherigen Ansprüche, **dadurch gekennzeichnet, dass** auf jeder Seite des Übertragungskanals (40; 140A, ..., 140D) die Noppen in mindestens zwei Reihen angeordnet sind, die sich entlang paralleler Richtungen erstrecken.

5. Anordnung (23; 123) nach einem der vorherigen Ansprüche, **dadurch gekennzeichnet, dass** die Begrenzungseinrichtungen (37; 137) mit mindestens einer der Platten (35A, 35B) einstückig sind und von der anderen beabstandet sind.

6. Anordnung (123) nach einem der vorherigen Ansprüche, **dadurch gekennzeichnet, dass** sie ferner ein weiteres Wellenleiterpaar (130A,...., 130D) analog zu dem Wellenleiterpaar aufweist und dass die Begrenzungseinrichtungen (137) in dem Innenraum (36) einen Übertragungskanal (40; 140A, ..., 140D) für jedes Wellenleiterpaar (130A, ..., 130D) begrenzen.

7. Antenne (10), umfassend eine Leitanordnung (23; 123) für Funkwellen nach einem der vorherigen Ansprüche.

## Claims

1. A guiding set (23; 123) for radio-electric waves, comprising a pair of waveguides (30; 130A,...,130D) made up of a first waveguide (31) and a second waveguide (32) forming successive segments of a same transmission way for the radio-electric waves;
the set (23; 123) comprising a connecting piece (33) comprising:
- two plates (35A, 35B) arranged opposite one another while defining an inner space (36) between them;
- delimiting means (37; 137) delimiting, in the inner space (36), a radio-electric wave transmission channel (40; 140A,...,140D), the transmission channel (40; 140A,...,140D) emerging on the one hand on the first waveguide (31) and on the other hand on the second waveguide (32);
the delimiting means (37; 137) being formed from a plurality of studs extending transversely between the two plates (35A, 35B);
the second waveguide (32) being able to slide freely along the transmission channel (40; 140A,...,140D) with play;
the studs are arranged in at least two rows, the transmission channel (40; 140A,...,140D) being formed between these rows.

2. The set (23; 123) according to claim 1, **characterized in that** the first waveguide (31) is secured to the connecting part (33).

3. The set (23; 123) according to any one of the preceding claims, **characterized in that** each of the first waveguide (31) and the second waveguide (32) is inserted between said rows of studs.

4. The set (23; 123) according to any one of the preceding claims, **characterized in that** on each side of the transmission channel (40; 140A,...,140D), the studs are arranged in at least two rows extending in parallel directions.

5. The set (23; 123) according to any one of the preceding claims, **characterized in that** the delimiting means (37; 137) are solidary arranged to at least one of the plates (35A, 35B) and are spaced apart from one another.

6. The set (123) according to any one of the preceding claims, **characterized in that** it further includes another pair of waveguides (130A,...,130D) similar to said pair of waveguides and **in that** the delimiting means (137) delimit, in the inner space (36), a transmission channel (40; 140A,...140D) for each pair of waveguides (130A,...,130D).

7. An antenna (10) comprising a guiding set (23; 123) for radio-electric waves according to any one of the preceding claims.
